# EUROPEAN PATENT SPECIFICATION

(11) **EP 3 603 410 B1**
(45) Date of publication and mention of the grant of the patent: **14.06.2023**
(21) Application number: 18770821.9
(22) Date of filing: 09.01.2018
(51) Int. Cl.: A23G 1/00, A23G 1/32, A23G 9/32, A23L 3/3508, A23L 3/3526, A23L 3/3562, A23G 1/44, A23G 1/40

(54) **HIGHLY POLYUNSATURATED FATTY ACID-CONTAINING CHOCOLATE-LIKE FOOD PRODUCT WHEREIN GENERATION OF OFF-FLAVOR IS SUPPRESSED**
SCHOKOLADENÄHNLICHES NAHRUNGSMITTEL MIT HOHEM GEHALT MEHRFACH UNGESÄTTIGTER FETTSÄUREN UND MIT UNTERDRÜCKTEM BEIGESCHMACK
PRODUIT ALIMENTAIRE DE TYPE CHOCOLAT CONTENANT UN ACIDE GRAS HAUTEMENT POLYINSATURÉ, DANS LEQUEL LA PRODUCTION D'UN MAUVAIS GOÛT EST SUPPRIMÉE

(30) Priority: 21.03.2017 JP 2017053863
(43) Date of publication of application: 05.02.2020
(73) Proprietor: Fuji Oil Holdings Inc., Izumisano-shi, Osaka 598-8540 (JP)
(72) Inventor: ISHIWATA, Akiyuki, Izumisano-shi Osaka 598-8540 (JP); MORIKAWA, Miwako, Izumisano-shi Osaka 598-8540 (JP); KATO, Masaharu, Izumisano-shi Osaka 598-8540 (JP); YOSHINO, Yuriko, Izumisano-shi Osaka 598-8540 (JP)
(74) Representative: Becker Kurig & Partner Patentanwälte mbB
(86) International application number: PCT/JP2018/000143
(87) International publication number: WO 2018/173419

(56) References cited:
- WO-A1-99/45788
- WO-A1-2004/112777
- WO-A1-2013/122122
- WO-A1-2016/067804
- WO-A1-2016/194558
- JP-A- S5 917 949
- JP-A- H05 292 885
- JP-A- H07 227 227
- JP-A- H09 205 988
- JP-A- 2007 185 138
- JP-A- 2013 506 423

## Description

### [Technical Field]

The present invention relates to a highly polyunsaturated fatty acids-containing chocolate for ice cream coating wherein generation of off-flavor is suppressed.

### [Background Art]

Chocolate-like food products represented by chocolate are foods which are preferred by children. Accordingly, by blending a specific nutrient component into a chocolate-like food product, children can naturally ingest the nutrient component.

Highly polyunsaturated fatty acids represented by docosahexaenoic acid (DHA) and eicosapentaenoic acid (EPA) are materials of which physiological effects are attracting attention. However, highly polyunsaturated fatty acids are likely to be degraded oxidatively, and blending them into general foods is difficult in many cases.

JP H05-292885 A discloses a "chocolate composition characterized by containing hydrogenation-untreated oils and fats including eicosapentaenoic acid and/or a docosahexaenoic acid, and at least one kind of catechin."

JP S59-17949 A discloses a "highly polyunsaturated fatty acids-containing food characterized by containing film-form oils and fats which are particles having a diameter of 2 mm or smaller and which are formed by covering oils and fats containing highly polyunsaturated fatty acids with an edible film-forming substance formed of proteins or salts thereof, lipids, or a combination thereof so that the oils and fats are substantially insulated from the outside air. "

WO 2016/194558 A1 discloses a method for manufacturing chocolate-like food.

JP 2013 506423 A discloses a ω3 fatty acid enriched shortening and nut butter.

WO 20041112777 A1 discloses a composition for prevention/treatment for varicose vein.

JP S59-17949 A discloses a food containing highly unsaturated fatty acid.

JP H07-227227 A discloses a stable emulsified composition and a food containing the same.

### [Summary of Invention]

### [Technical Problem]

The present invention relates to a chocolate containing a highly polyunsaturated fatty acids-containing oil and fat for ice cream coating. An object of the present invention is to provide a chocolate for ice cream coating in which changes in flavor over time are suppressed.

### [Solution to Problem]

The inventors of the present invention conducted extensive studies to solve the above-described problems.

According to the method disclosed in JP H05-292885 A, an effect of suppressing temporal changes is considered to be recognized to a certain extent, but because an expiration date of a chocolate-like food product is relatively long, a more powerful effect is required.

In the method disclosed in JP S59-17949 A, the highly polyunsaturated fatty acids are added in the form of a capsule. Therefore, it is difficult to apply the method to foods in which a melting sensation in the mouth is emphasized, such as a chocolate-like food product.

As a result of intensive studies conducted by the inventors of the present invention, they have found that, by incorporating the features in the appended claim 1, changes in flavor over time are suppressed, and therefore have completed the present invention.

In other words, the present invention relates to the appended set of claims.

### [Advantageous Effects of Invention]

The present invention relates to a chocolate containing a highly polyunsaturated fatty acids-containing oil and fat for ice cream coating. According to the present invention, it is possible to obtain a chocolate for ice cream coating in which changes in flavor over time are suppressed.

### [Description of Embodiments]

The present invention discloses a chocolate for ice cream coating, characterized by comprising: 1 to 6% by mass of highly polyunsaturated fatty acids in a total amount of docosahexaenoic acid and eicosapentaenoic acid; and 0.01 to 1 % by mass of a material having a chelate effect.

The present invention also discloses a method for suppressing off-flavor generation, characterized by comprising: incorporating 0.01 to 1 % by mass of one or more materials having a chelate effect which are selected from citric acid and phytic acid in a chocolate for ice cream coating containing 1 to 6% by mass of highly polyunsaturated fatty acids in a total amount of docosahexaenoic acid and eicosapentaenoic acid.

A chocolate-like food product mentioned in the present invention corresponds to chocolate as an example. In particular, application of the present technique to chocolates for ice cream coating which are distributed at a low temperature is preferable, because effects thereof are significantly exhibited.

A highly polyunsaturated fatty acids-containing oil and fat referred to in the present invention is an oil and fat containing one or more highly polyunsaturated fatty acids as its constituent fatty acids. A highly polyunsaturated fatty acid is also called a polyunsaturated fatty acid, and is a generic term for fatty acids containing many double bonds. Specific examples thereof include docosahexaenoic acid (DHA) and eicosapentaenoic acid (EPA). A highly polyunsaturated fatty acids-containing oil and fat may be referred to as a PUFA oil.

The chocolate-like food product according to the present invention needs to contain a highly polyunsaturated fatty acids-containing oil and fat such that a total amount of DHA and EPA becomes 1 to 6% by weight. Effects of a chocolate-like food product can be expected by incorporating an appropriate amount of a highly polyunsaturated fatty acids-containing oil and fat.

Various types of oils and fats containing highly polyunsaturated fatty acids can be used. Typical examples thereof include fish oils.

In addition, when using a highly polyunsaturated fatty acids-containing oil and fat, it is preferable to use a highly polyunsaturated fatty acids-containing oil and fat that has been subjected to any antioxidative treatment. For example, it is preferable to use a highly polyunsaturated fatty acids-containing oil and fat blended with an antioxidant oil and fat composition which contains 0.5 to 18% by weight of water and in which 1 to 38% by weight of an aqueous phase in which 2.5 to 65% by weight of a water-soluble antioxidant is contained and, furthermore, carbohydrates are added such that a total water-soluble solid content in the aqueous phase becomes 18 to 79% by weight is dispersed in the oil phase.

In the present invention, the chocolate-like food product contains 0.01 to 1% by mass of a material having a chelate effect. This amount is more preferably 0.05 to 0.7% by mass, and is even more preferably 0.07 to 0.5% by mass. By incorporating an appropriate amount of a material having a chelate effect, it is possible to suppress changes in flavor over time in the chocolate-like food product containing a highly polyunsaturated fatty acids-containing oil and fat.

In the present invention, examples of materials having a chelate effect include citric acid, lactoferrin, rutin, gallic acid, and phytic acid. Among these, more preferable examples include citric acid, gallic acid, and phytic acid, and even more preferable examples include citric acid and phytic acid. By using a material having a desirable chelate effect, it is possible to suppress changes in flavor over time in the chocolate-like food product containing a highly polyunsaturated fatty acids-containing oil and fat.

In the chocolate-like food product according to the present invention, in addition to the above examples, various raw materials generally used in the production of chocolate-like food products can be appropriately used as long as the effects of the present invention are not affected. Hereinafter, examples will be described.

### [Examples]

### ∘ Examination 1

A chocolate for ice cream coating was prepared according to the formulation in Table 1. A preparation method followed a "o Method for preparing chocolate for ice cream coating."

The obtained sample was evaluated according to a "∘ Method for evaluating chocolate for ice cream coating."

The results are shown in Table 2.

**Table 1: Formulation**

| | Comparative Example 1 | Example 1 | Example 2 | Example 3 | Example 4 |
|---|---|---|---|---|---|
| Cocoa | 20.0 | 20.0 | 20.0 | 20.0 | 20.0 |
| Sugar | 25.0 | 25.0 | 25.0 | 25.0 | 25.0 |
| Vegetable oils and fats | 54.8 | 54.6 | 54.7 | 54.7 | 54.7 |
| Lecithin | 0.1 | 0.1 | 0.1 | 0.1 | 0.1 |
| Polyglycerol ester | 0.1 | 0.1 | 0.1 | 0.1 | 0.1 |
| Citric acid | | 0.2 | | | |
| Lactoferrin | | | 0.1 | | |
| Oxygenated rutin | | | | 0.1 | |
| Gallic acid | | | | | 0.1 |
| Total | 100.0 | 100.0 | 100.0 | 100.0 | 100.0 |

| | | | | | |
|---|---|---|---|---|---|
| (Units in the formulation are % by mass) | | | | | |

· As vegetable oils and fats, oils and fats obtained by mixing oils and fats containing EPA and DHA into "Palm Ace 10" manufactured by FUJI OIL CO., LTD., which is super palm olein, such that a total amount of EPA and DHA in the chocolate for ice cream coating became 2.8% by mass, were used.
· As the oils and fats containing EPA and DHA, oils and fats obtained by additionally distributing an antioxidant oil and fat composition in which 19% by mass of an aqueous phase containing a total of 58% by mass of vitamin C, catechin, and sugar were finely dispersed in 81% by mass of an oil phase containing an oil-soluble emulsifying agent therein, were used.

### ∘ Method for preparing chocolate for ice cream coating

1: According to the formulation table, raw materials other than lecithin and some of vegetable oils and fats were mixed.
2: The mixture was microparticulated with a roll refiner.
3: Kneading was performed while warming in a Conche.
4: Lecithin, and vegetable oils and fats not added in 1 were added and mixed therewith.

### ∘ Method for evaluating chocolate for ice cream coating

1. 1000 g of each of examination samples was put into a 1000 ml brown plastic bottle and covered.
2. The bottle was stored at 40°C.
3. On day 6, 14, and 21, flavor evaluation was performed. Evaluation was performed according to the following criteria by consultation between three skilled panelists.

5 points: No fishy odor
4 points: A slightly different flavor than chocolate.
3 points: A flavor that can be recognized as a fishy odor.
2 points: A strong fishy odor
1 point: A stronger fishy odor

At the stage on day 7, chocolates having 4 points or higher were regarded as a pass.

**Table 2: Results**

| | Comparative Example 1 | Example 1 | Example 2 | Example 3 | Example 4 |
|---|---|---|---|---|---|
| On day 7 | 3 | 5 | 4 | 4 | 5 |
| On day 14 | 2 | 3 | 2 | 3 | 3 |
| On day 23 | 1 | 3 | 1 | 2 | 2 |

### ∘ Examination 2 (not part of the invention)

A tempered-type chocolate was prepared according to the formulation in Table 3. A preparation method followed a "∘ Method for preparing tempered-type chocolate."

The obtained sample was evaluated according to a "∘ Method for evaluating tempered-type chocolate."

The results are shown in Table 4.

**Table 3: Formulation**

| | Comparative Example 2 | Example 5 |
|---|---|---|
| Cocoa | 49.45 | 48.95 |
| Sugar | 35 | 35 |
| Vegetable oils and fats | 15 | 15 |
| Lecithin | 0.5 | 0.5 |
| Phytic acid | | 0.5 |
| Polyglycerol ester | 0.05 | 0.05 |
| Total | 100 | 100 |

| | | |
|---|---|---|
| (Units in the formulation are % by mass) | | |

· As vegetable oils and fats, oils and fats obtained by mixing oils and fats containing EPA and DHA into "NEWSS7" manufactured by FUJI OIL CO., LTD., which is a tempered-type hard butter, such that a total amount of EPA and DHA in the chocolate became 0.4% by mass, were used. This example is not part of the invention.
· As the oils and fats containing EPA and DHA, oils and fats obtained by additionally distributing an antioxidant oil and fat composition in which 19% by mass of an aqueous phase containing a total of 58% by mass of vitamin C, catechin, and sugar were finely dispersed in 81% by mass of an oil phase containing an oil-soluble emulsifying agent therein, were used.
· As phytic acid, a product manufactured by TSUNO FOOD INDUSTRIAL CO., LTD. was used.

### ∘ Method for preparing tempered-type chocolate

1: According to the formulation table, raw materials other than lecithin, polyglycerol ester, and some of vegetable oils and fats were mixed.
2: The mixture was microparticulated with a roll refiner.
3: Kneading was performed while warming in a Conche.
4: Lecithin, and vegetable oils and fats not added in 1 were added and mixed therewith.

### ∘ Method for evaluating tempered-type chocolate

1. Each of examination samples was subjected to a tempering operation, and then poured into a plate-like mold, cooled, and solidified. Thereby, an 80 g bar of chocolate was obtained as a sheet.
2. The bottle was stored at 28°C.
3. On day 7, 14, 28, 42, and 63, flavor evaluation was performed. Evaluation was performed according to the following criteria by consultation between three skilled panelists.

5 points: No fishy odor
4 points: A slightly different flavor than chocolate.
3 points: A flavor that can be recognized as a fishy odor.
2 points: A strong fishy odor
1 point: A stronger fishy odor

At the stage after day 63, chocolates having 4 points or higher were regarded as a pass.

**Table 4: Results**

| | Comparative Example 2 | Example 5 |
|---|---|---|
| On day 7 | 5 | 5 |
| On day 14 | 5 | 5 |
| On day 28 | 5 | 5 |
| On day 42 | 5 | 5 |
| On day 63 | 3 | 5 |

### Conclusions

As shown in the results, the effect of suppressing a fishy odor derived from highly polyunsaturated fatty acids has been confirmed by using a material having a chelate effect. In particular, when citric acid or phytic acid was used, the effect thereof was significantly good.

## Claims

1. A chocolate for ice cream coating, **characterized by** comprising:
1 to 6% by mass of highly polyunsaturated fatty acids in a total amount of docosahexaenoic acid and eicosapentaenoic acid; and
0.01 to 1% by mass of a material having a chelate effect.

2. The chocolate for ice cream coating according to claim 1, wherein the material having the chelate effect is one or more selected from citric acid and phytic acid.

3. A method for suppressing off-flavor generation, **characterized by** comprising:
incorporating 0.01 to 1% by mass of one or more materials having a chelate effect which are selected from citric acid and phytic acid in a chocolate for ice cream coating containing 1 to 6% by mass of highly polyunsaturated fatty acids in a total amount of docosahexaenoic acid and eicosapentaenoic acid.

## Patentansprüche

1. Schokolade für Eiscreme-Überzug, **dadurch gekennzeichnet, dass** sie umfasst:
1 bis 6 Gew. -% hochgradig mehrfach ungesättigte Fettsäuren in einer Gesamtmenge von Docosahexaensäure und Eicosapentaensäure; und
0,01 bis 1 Gew-% eines Stoffs mit Chelat-Effekt.

2. Schokolade für Eiscreme-Überzug gemäß Anspruch 1, wobei der Stoff, aufweisend den Chelat-Effekt, einer oder mehrere ist, ausgewählt aus Zitronensäure und Phytinsäure.

3. Verfahren zur Unterdrückung von Off-Flavour-Erzeugung, **dadurch gekennzeichnet, dass** es umfasst:
Einarbeiten von 0,01 bis 1 Gew.-% eines oder mehrerer Stoffe, aufweisend einen Chelat-Effekt, ausgewählt aus Zitronensäure, und Phytinsäure, in einer Schokolade für Eiscreme-Überzug, enthaltend 1 bis 6 Gew.-% hochgradig mehrfach ungesättigte Fettsäuren in einer Gesamtmenge von Docosahexaensäure und Eicosapentaensäure.

## Revendications

1. Chocolat pour revêtement de crème glacée, caractérisé comme comprenant :
1 à 6 % en masse d'acides gras hautement polyinsaturés dans une quantité totale d'acide docosahexaénoïque et d'acide éicosapentaénoïque ; et
0,01 à 1 % en masse d'une matière ayant un effet de chélate.

2. Chocolat pour revêtement de crème glacée selon la revendication 1, dans lequel la matière ayant l'effet de chélate est une ou plusieurs choisies parmi l'acide citrique et l'acide phytique.

3. Procédé de suppression de production de mauvais goût, caractérisé comme comprenant :
l'incorporation de 0,01 à 1 % en masse d'une ou de plusieurs matières ayant un effet de chélate qui sont choisies parmi l'acide citrique et l'acide phytique dans un chocolat pour revêtement de crème glacée contenant 1 à 6 % en masse d'acides gras hautement polyinsaturés dans une quantité totale d'acide dcosahexaénoïque et d'acide éicosapentaénoïque.
